# EUROPÄISCHE PATENTANMELDUNG

(11) **EP 1 605 197 A1**
(43) Veröffentlichungstag der Anmeldung: **14.12.2005**
(21) Anmeldenummer: 05005811.4
(22) Anmeldetag: 17.03.2005
(51) Int. Cl.: F17C 5/00, B01D 53/26, B01D 53/04

(54) **Erdgas-Tankstelle mit einer Trocknungseinrichtung**

(30) Priorität: 08.06.2004 DE 102004027766; 14.06.2004 DE 102004028442
(71) Anmelder: E.ON Ruhrgas AG, 45138 Essen (DE)
(72) Erfinder: Wolf, Dieter, 46286 Dorsten (DE)
(74) Vertreter: Harlacher, Mechthild

(57) **Zusammenfassung**

Die Erfindung betrifft eine Erdgas-Tankstelle mit einer Trocknungseinrichtung (2), die eine Eintritts- und eine Austrittsöffnung (2a, 2b) aufweist und ein festes Trocknungsmittel (5) beinhaltet und mit einer Erdgasleitung (3), die an die Eintritts- und Austrittsöffnung (2a, 2b) angeschlossen ist.

Erfindungsgemäß wird das vom Sättigungsgrad abhängige Gewicht des Trocknungsmittels (5) oder der Trocknungseinrichtung (2) mittels einer Wägezelle (6) gemessen und der Messwert einer Anzeige- und/oder Auswerteeinrichtung (8) zugeführt.

## Beschreibung

Die Erfindung betrifft eine Erdgas-Tankstelle mit einer Trocknungseinrichtung, die eine Eintritts- und eine Austrittsöffnung aufweist und ein festes Trocknungsmittel beinhaltet und mit einer Erdgasleitung, die an die Eintritts- und Austrittsöffnung angeschlossen ist.

Erdgas wird im Rahmen des Fernleitungstransports in Untertagespeichern gespeichert, wo es Wasser aufnimmt. Dieses liegt beim Ausspeichern des Erdgases in freier oder dampfförmiger Form vor. Um beim Transport im Erdgasleitungsnetz Schäden aufgrund von Korrosion oder Hydratbildung zu vermeiden, wird dem Erdgas beim Ausspeichern das Wasser weitgehend durch Absorption, in der Regel mittels Glykol entzogen. Diese Trocknung im großtechnischem Stil gewährleistet einen für die Anforderungen des Gastransportes, der Gasverteilung und der örtlichen Gasversorgung ausreichend geringen Wassergehalt.

Erdgas wird in zunehmendem Maße als Kraftstoff für Fahrzeuge eingesetzt. Das Erdgas gelangt über Erdgasleitungen zu den Erdgas-Tankstellen. Diese weisen als Hauptkomponenten einen Kompressor, einen Hochdruckspeicher, eine Trocknungseinrichtung sowie eine Zapfsäule auf. In dem Hochdruckspeicher wird das Erdgas auf einem sehr hohen Druck von ca. 290 bar vorrätig gehalten. Die Trocknungseinrichtung ist mittels einer Eintritts- und einer Austrittsöffnung an eine Erdgasleitung angeschlossen. Die Trocknungseinrichtung ist auf der Hochdruck- oder der Niederdruckseite bzw. stromab- oder stromauf des Kompressors vorgesehen, um sicherzustellen, dass der Wassertaupunkt des Erdgases beim Tankvorgang einen Grenzwert nicht überschreitet. Das Wasser muss aus dem Erdgas vor dem Tankvorgang zuverlässig entfernt werden, weil durch das hohe Druckniveau in einer Erdgastankstelle eine starke Kondensationsneigung des Wassers im Erdgas besteht.

Die Trocknungseinrichtung ist mit einem festen Trocknungsmittel befüllt, welches entsprechend der jeweiligen Auslegung eine bestimmte Menge Wasser bzw. Wasserdampf adsorbieren kann. Aufgrund der begrenzten Aufnahmefähigkeit des Trocknungsmittels ist es erforderlich, das Trocknungsmittel regelmäßig zu erneuern, um eine gewünschte Qualität der Trocknung des Erdgases zu gewährleisten.

Aus der Praxis ist bekannt, den Wassertaupunkt des Erdgases stromab der Erdgas-Trocknungseinrichtung mit einem Taupunktmessgerät zu erfassen. Bei Überschreitung des zulässigen Taupunktes wird ein Alarmsignal generiert und das Trocknungsmittel ausgetauscht. Nachteilig ist, das die aus der Praxis bekannten Taupunktmessgeräte relativ häufig größere Fehler aufweisen und empfindlich gegen Verschmutzung sind, wodurch ein hoher Wartungs- und Reparaturaufwand resultiert. Außerdem müssen Taupunktmessgeräte in gewissen Abständen zeit- und kostenaufwändig kalibriert werden.

Alternativ zum Einsatz von Taupunktmessgeräten ist aus der Praxis bekannt, das Trocknungsmittel in Abhängigkeit von einer festgelegten Laufdauer des Kompressors auszutauschen. Diese Verfahrensweise hat den Nachteil, dass beim Austausch die Aufnahmekapazität des Trocknungsmittels häufig nicht ausgeschöpft wird, so dass unnötige Kosten entstehen. Wenn dagegen die maximale Aufnahmekapazität des Trocknungsmittels bereits vor dem Ende der festgelegten Laufdauer erreicht ist, besteht die Gefahr, dass das Erdgas nicht ausreichend getrocknet wird.

Der Erfindung liegt daher die Aufgabe zu Grunde, eine Tankstelle für Erdgas mit einer Trocknungseinrichtung so auszubilden, dass die zeitlichen Intervalle für den Austausch des Trocknungsmittels optimiert werden können.

Die Aufgabe wird durch eine Vorrichtung mit den Merkmalen des Anspruchs 1 gelöst.

Das vom Sättigungsgrad abhängige Gewicht des Trocknungsmittels oder der Trocknungseinrichtung wird erfindungsgemäß mittels einer Wägezelle gemessen und der Messwert einer Anzeige- und/oder Auswerteeinrichtung zugeführt. Der Sättigungsgrad ist ein Maß für die Menge des Wassers, welches vom Trocknungsmittel aufgenommen worden ist.

Die Wägezelle bildet durch die auf sie wirkende Gewichtskraft der des Trocknungsmittels oder der Trocknungseinrichtung den Sättigungsgrad oder die Aufnahmekapazität des Trocknungsmittels ab. Auf einfache Art und Weise wird ein Wert für den Sättigungsgrad bzw. die Aufnahmekapazität des Trocknungsmittels gemessen und angezeigt. Die Anzeige kann kontinuierlich oder periodisch erfolgen oder auf Anforderung. Ein bedarfsgerechter Austausch des Trocknungsmittels wird somit möglich. Die Wägezelle kann nach dem Austauschen des Trocknungsmittels auf Null gesetzt werden. Eine zeit- und kostenaufwändige Kalibrierung ist nicht erforderlich.

Die Wägezelle kann als Druckwägezelle oder als Zugwägezelle ausgebildet sein. Als Wägezellen können handelsübliche Wägezelle eingesetzt werden, deren Kosten gering sind.

Erfindungsgemäß erzeugt die Auswerteeinrichtung mindestens ein Alarmsignal, sofern das Gewicht des Trocknungsmittels oder der Trocknungseinrichtung einen Grenzwert überschreitet. Sicherheitshalber wird vorzugsweise ein Voralarm und ein Hauptalarm erzeugt.

Üblicherweise befindet sich die Wägezelle im explosionsgefährdeten Bereich der Tankstelle. Erfindungsgemäß befindet sich die Anzeige- und/oder Auswerteeinrichtung außerhalb dieses Bereichs der Tankstelle.

Vorteilhafterweise ist die Erdgasleitung so gestaltet , dass sie den Hub der Wägezelle aufnehmen kann.

Die Erfindung wird anhand der Zeichnung näher erläutert. Die Zeichnung zeigt in:
Fig.1 schematisch eine Erdgas-Tankstelle mit einer Erdgas-Trocknungseinrichtung in einer ersten Ausführungsform;
Fig.2 schematisch eine zweite Ausführungsform einer Trocknungseinrichtung.

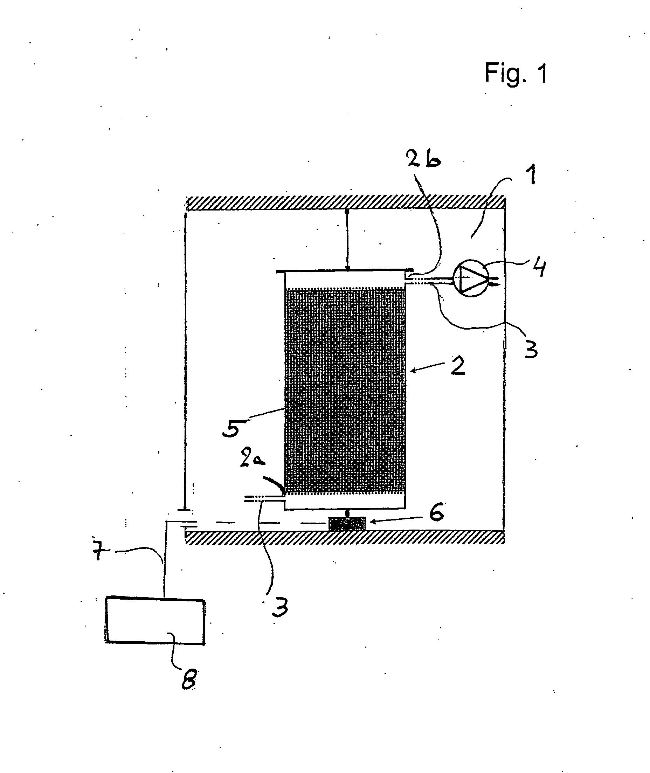

Gemäß Fig. 1 ist eine Erdgas-Tankstelle 1 mit einer Trocknungseinrichtung 2 dargestellt. Letztere weist eine Eintritts- und eine Austrittsöffnung 2a und 2b auf, die an eine Erdgasleitung 3 angeschlossen sind. Stromab der Trocknungseinrichtung 2 ist ein Kompressors 4 in die Erdgasleitung 3 eingebunden.

Die Trocknungseinrichtung 2 beinhaltet ein festes Trocknungsmittel 5 in Form eines Schüttgutes.

Nach Fig. 1 ruht die Trocknungseinrichtung 2 auf einer Wägezelle 6 in Form einer Druckwägezelle. Es wird eine handelsübliche Wägezelle eingesetzt, deren Kosten relativ gering sind. Das Gewicht der Trocknungseinrichtung 2 wird kontinuierlich gemessen. Über das Gewicht der Trocknungseinrichtung 2 lassen sich eine Aussage über den Sättigungsgrad oder die Aufnahmekapazität des Trocknungsmittels 5 treffen. In der Regel sind die Trocknungseinrichtungen so ausgelegt, dass sie ca. 10 - 20 kg Wasser aufnehmen können. Daher ist für die Wägeeinrichtung eine Auflösung bzw. Genauigkeit von 100g ausreichend.

Über eine Signalleitung 7 werden die Messwerte zu einer Anzeige-/und Auswerteeinheit 8 geleitet, die sich außerhalb des explosionsgefährdeten Bereichs der Tankstelle 1 befindet. Die Auswerteeinheit 8 erzeugt einen Voralarm sowie einen Hauptalarm, sobald ein erster und ein zweiter Grenzwert für das Gewicht bzw. den Sättigungsgrad überschritten werden. Nach dem Austausch des Trocknungsmittels 5 wird die Wägezelle 6 auf Null gestellt. Eine Kalibrierung ist nicht erforderlich.

Die nicht näher dargestellten Verbindungen der Erdgasleitung 3 mit der Trocknungsanlage 2 ist flexibel, so dass diese den Hub der Wägezelle 6 aufnimmt.

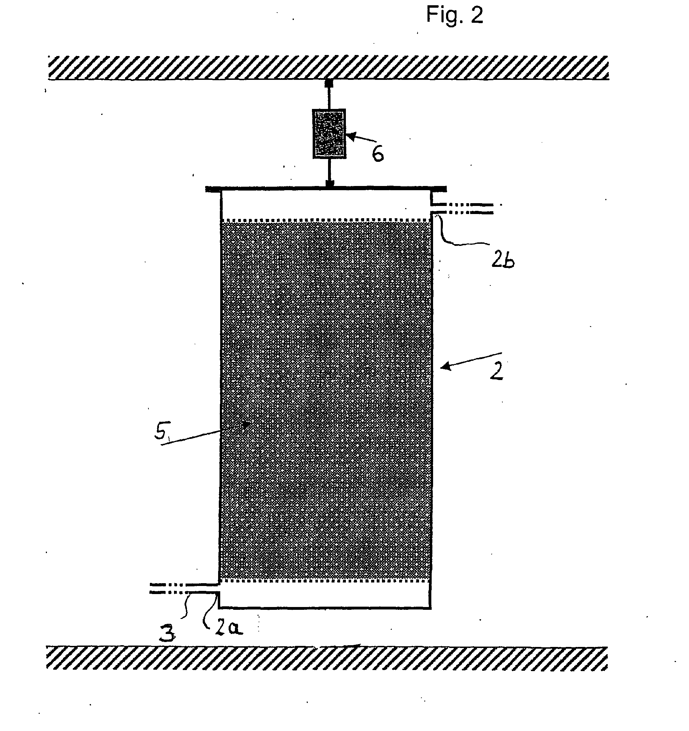

Die Ausführungsform der Trocknungseinrichtung nach Fig. 2 stimmt bis auf die Wägezelle 6 mit der Ausführung nach Fig.1 überein. Bei der Ausführungsform nach Fig. 2 hängt die Trocknungseinrichtung 2 an einer Wägezelle 6 in Form einer Zugwägezelle.

Im Rahmen der Erfindung sind ohne weiteres Abwandlungen möglich. So kann sich die Wägezelle 6 im Inneren der Trocknungseinrichtung 2 befinden, so dass nur das Gewicht des Trocknungsmittels gemessen wird.

Die Gewichtsmessung kann statt kontinuierlich auch periodisch erfolgen.

## Patentansprüche

1. Erdgas-Tankstelle mit einer Trocknungseinrichtung, die eine Eintritts- und eine Austrittsöffnung (2a, 2b) aufweist und ein festes Trocknungsmittel (5) beinhaltet und mit einer Erdgasleitung (3), die an die Eintritts- und Austrittsöffnung (2a, 2b) angeschlossen ist,
**dadurch gekennzeichnet, dass** das vom Sättigungsgrad abhängige Gewicht des Trocknungsmittels (5) oder der Trocknungseinrichtung (2) mittels einer Wägezelle (6) gemessen und der Messwert einer Anzeige- und/oder Auswerteeinrichtung (8) zugeführt wird.

2. Vorrichtung nach Anspruch 1,
**dadurch gekennzeichnet, dass** die Wägezelle (6) als Druckwägezelle oder als Zugwägezelle ausgebildet ist.

3. Vorrichtung nach Anspruch 1 oder 2,
**dadurch gekennzeichnet, dass** die Anzeige- und/oder Auswerteeinrichtung (8) mindestens ein Alarmsignal erzeugt, wenn das Gewicht des Trocknungsmittels (5) oder der Trocknungseinrichtung (2) einen Grenzwert überschreitet.

4. Vorrichtung nach einem der Ansprüche 1 bis 3, wobei sich die Trocknungseinrichtung (2) im explosionsgefährdeten Bereich der Tankstelle befindet, **dadurch gekennzeichnet, dass** sich die Anzeige- und/oder Auswerteeinrichtung (8) außerhalb des explosionsgefährdeten Bereichs der Tankstelle befinden.

5. Vorrichtung nach einem der Ansprüche 1 bis 4,
**dadurch gekennzeichnet, dass** die Erdgasleitung (3) so gestaltet ist, dass sie den Hub der Wägezelle (6) aufnimmt.
